# EUROPEAN PATENT SPECIFICATION

(11) **EP 4 113 334 B1**
(45) Date of publication and mention of the grant of the patent: **30.07.2025**
(21) Application number: 21182502.1
(22) Date of filing: 29.06.2021
(51) Int. Cl.: G06F 21/44, G06F 21/32

(54) **METHOD AND SYSTEM FOR AUTOMATIC PROOFING OF A REMOTE RECORDING**
VERFAHREN UND SYSTEM ZUR AUTOMATISCHEN PRÜFUNG EINER FERNAUFZEICHNUNG
PROCÉDÉ ET SYSTÈME DE VÉRIFICATION AUTOMATIQUE D'UN ENREGISTREMENT À DISTANCE

(43) Date of publication of application: 04.01.2023
(73) Proprietor: Nect GmbH, 20457 Hamburg (DE)
(72) Inventor: JÜRGENS, Benny Bennet, 21077 Hamburg (DE)
(74) Representative: Seemann & Partner Patentanwälte mbB

(56) References cited:
- US-A1- 2019 347 500
- US-A1- 2020 045 226
- US-A1- 2021 011 986

## Description

The present invention relates to a method and a system for automatic proofing of a remote recording.

Traditionally, a person that needs to identify itself to another person will come face-to-face to and present a personal identification document to that person. This usually involves a live conversation, and the presence of the person and his or her identification document is not in doubt. In remote identity verification, this live conversation is replaced by technical means and procedures meant to reproduce or mimic such live interaction. While verifying whether a live conversation is actually taking place at that moment is trivial for a human, it is a significant technical challenge for automated or machine systems.

The remote identification of a natural person ("user") by means of a physical identification document, e.g., an identity card, a passport, or a driver's license, is done either optically or via an electronic identity ("eID") stored on a chip of the physical identification document.

The chip on the card is usually secured cryptographically. In self-service in the remote channel, a personal identification number (PIN) is often used as an additional security factor, to decrypt the chip and/or to prove that access to the chip is authorized. The security of remote-channel identification via eID thus results from the possession factor of the card and the knowledge factor of the PIN. To prove one's own identity in the eID, the user must connect the ID document to the system via a card reader and can then add the second security factor by entering the PIN.

eID systems usually have the disadvantage that each specific type requires a separate connection. A German bank, for example, may allow legitimation via eID, but this then usually only includes German ID cards and does not allow use of Spanish ID cards, for example. In addition, not all ID documents support secure legitimation via remote channel using chip and PIN. A standard passport, for example, cannot be used to identify oneself via eID. It usually comes with a chip, but access is without a PIN. As a rule, only a fraction of users are equipped with an eID, insofar as they can remember the PIN at all.

In contrast, the optical control of an ID document offers the potential to support almost all ID documents in the world via a single system. In order to confirm one's own identity via an optical control of the ID document, a user usually has to take a picture (photo, video) of the ID document and a picture (photo, video) of his or her own face ("selfie"). A system can then confirm the user's identity or characteristics such as, e.g., the user's age. In order for there to be confidence in the established identity, some security precautions have to be taken. The more difficult it is to circumvent the security precautions, the higher the trust in the established identity or property will be.

Broadly speaking, the following checks can be performed:
- a check of the document, a.o. regarding manipulation and security features,
- a check of the legitimate use of the identity document, such as whether there is a facial match or mismatch between the passport photo on the ID document and the selfie,
- a liveliness check of the user, where it may, for example, be established that there is a "real" face in selfie, that the user does not wear a mask, that the image is a real photo, not a deep fake,
- and a check of the timeliness of the process, meaning that the images are taken at that moment.

The first three of these checks are usually sufficient when used within a closed and controlled system. For example, the identity check at an airport gateway only has to ensure that the objects presented to it are trustworthy. This means that, for example, a face is really a face and an identification document is a real identification document and that the face and the identification document match each other. An airport gateway check is an example of a closed and closely controlled system. The scans of the user's face and of the identification document are done with devices that the user cannot access. It is therefore improbable that the user can falsify or modify the recordings him- or herself.

In remote identity verification, however, the user uses his or her own device, to which he or she has complete access, which opens the door for the submission of manipulated data into the identification verification process. Therefore, the last one of the above-listed checks, i.e., the timeliness check, is vital when doing a remote identification in which the user uses a system or a device that is outside of a controlled system. For security reasons, it has to be ensured in this case that the recording is really done at the actual point of time so that it is made impossible to present stolen or doctored recordings and thereby to use a false or stolen identity.

The above-mentioned criteria used to establish a secure visual identity can be extended as desired. For example, it can be a requirement that the identity features determined are checked against databases or that only a certain image quality is permissible.

The optical control can be performed by a human (sometimes called light processing) or processed by a machine system (sometimes called dark processing). The present application deals exclusively with machine control, i.e., dark processing, and not with the validation of a user's identity performed by a human being, but can be used to support and/or secure human based control (light processing) by automated processes.

Even though at least the first three of the checks listed above are decisive for a high level of confidence in the establishment of identity, the system will stand or fall with the reliable determination of the actuality or timeliness of the transaction.

This will be illustrated by an example. If a system has been developed that can check the security features of an ID document that can be seen in white light, e.g., optically variable colors, holograms, changeable laser images, etc., with a high degree of reliability, the system can confirm that the ID document shown in the video is an original ID document, but it cannot say whether the video was previously stolen and then fed into the system. Furthermore, digital forgery of an identity document can be a viable alternative to physical forgery. Digital manipulation of a video that is close to perfection is much easier to achieve if the manipulation does not have to be live. For example, if one wants to digitally forge holograms into an identity document, the holograms must behave according to the position and tilt of the card. **If** this manipulation is to happen live, perfect recognition of the card's position must be developed. This requires specialized knowledge in automated image processing. Furthermore, a very powerful hardware is needed. **If** the manipulation does not have to be done live, the forgery can be done with a standard video editing program in any amount of time and would thus be potentially available to ambitious amateurs. Ensuring that the recording of the ID document and/or face takes place at that particular moment can thus prevent old recordings from being used and sets a high hurdle for digital forgery of the recordings.

A distinction can be made between originality and timeliness. Broadly, for originality, it has to be ensured that the recordings were freshly created on demand. A recording that has been used before is not an original recording. In this case, the speed of execution cannot be taken into account. However, a recording may be original, but not timely, since, e.g., its time of recording may be completely unknown. This is where the second factor, timeliness, comes in where it is checked, that the recording has been done at a specific point in time.

If it is absolutely necessary to ensure that the images are also up to date, they must be taken within a certain period of time in order to ensure that the images were taken at the actual time of the request, e.g., to limit the period of time for digital manipulation.

A good system for checking the timeliness of the process usually also helps to determine the liveness of the recording and vice versa. In principle, a liveness check can also be performed without a separate challenge to the user (so-called passive liveness detection), for example by checking the structure of the surface of the object shown, in this case the face. However, a varied challenge to move the face increases the security enormously (active liveness detection). For example, if the user is asked to say two words chosen at random, the variance of the words helps the verification of the originality of the operation and the movement of the face prevents the use of a photo and can also help in the detection of a mask. A method and a system providing many of these features is disclosed in European Patent Application EP 3 575 993 A1 of the present applicant. If this is supplemented with non-user controlled watermarking, the originality of the recording is further underpinned and an attack is made more difficult (e.g. random sound frequencies in the non-audible range, played while the two words are being said). If the challenge (the words) is only valid for a certain period of time after transmission, the timeliness can be secured. Thus, when ensuring originality and timeliness, a distinction can be made between active and passive systems. In active systems, the user must actively solve a challenge.

Passive watermarking on the audio level helps with an active challenge that the user has to solve on the audio level, e.g. by speaking given words. Accordingly, passive watermarking in the visual layer helps with a challenge that the user has to solve actively on the visual layer. In this regard, for example, it is checked whether the facial movements match the words being spoken. Such watermarking can be, for example, by vibrating the built-in vibration unit of the recording device at a random time and validating this vibration in the visual material based on blurring, as described, for example, in European Patent Application EP 3 575 994 A1 of the present applicant. If one now combines all of:
1. speech to text with verification that the correct words were spoken,
2. motion to speech with checking if the facial movements match the spoken words,
3. sound watermarking by random or quasi-random sound frequencies,
4. visual watermarking by random or quasi-random image vibration,
5. and/or points 3 and 4 alternately per process and/or alternately per progress of the recording or solution of the task,
one obtains a high degree of certainty in the originality and timeliness of the recording and that the face in the video is a living face. However, it is important here that the challenge to the user has a variance. This means that in our example it must not always be the same words. If the same words were always used, one way to attack could be to play an old video on an ultra-high-resolution screen and film it with the lowest possible camera quality. Certainly, there are ways to defend against this, the so-called image-of-image detection, but still, a high variance in the challenge significantly increases security.

If the user is asked to record a video of the ID document, it is possible to determine the physical authenticity of the ID document on the basis of optically variable security features and, at the same time, to use visual watermarking to confirm that the recording is up-to-date. Watermarking on the audio level would only help to a very limited extent and can therefore be neglected. Furthermore, it has been found that watermarking on the sound level is difficult to achieve with mobile devices when headphones are used. In general, however, the goal must be to impose as few hurdles as possible on the user for a user-friendly process.

To highlight the optically variable security features (e.g., holograms), the user must move and tilt his or her ID document. However, this is usually not an individual challenge to the user. In known systems, the user is usually simply asked to move the document until enough optically variable security features were visible and validatable. Most known systems do not even use visual watermarking in this regard. Thus, an old video or even a picture that has already been successfully validated once in the system can be used as often as desired in so-called replay attacks. But, even with visual watermarking, there is still a residual risk that the recording is not made from a physically present ID document at that moment. For example, if a previously successfully validated recording or a previously manipulated recording is played back on a device with very high resolution and then filmed, visual watermarking would probably not increase security as needed in many cases, like opening a bank account under European anti-money laundering (AML) laws, where equivalent security as in physical presence is required.

In this case, too, supplemental testing based on a variation-rich user challenge is a very good way to ensure that the process is timely and, at the same time, a very good way to ensure that the real, physical ID document is being filmed; the ID document is the real, "living" ID document and not a recording of a recording (image-of-image-scan).

US 2021/0011986 A1 discloses a system for remote identity verification including a computing device configured to capture a first image of the user at a first distance and capture a second image at a second distance and then processing the images to create one or more facemaps. These facemaps are processed to verify that the images were captured from a live person. If the facemaps represent a live person, the facemaps and a user identifying code are sent to a trusted image server. The trusted image server is configured to retrieve a trusted image from a database using the user ID code, to generate trusted image facemaps, and to compare captured image facemaps to the trusted image facemaps. Responsive to a match between the captured image facemaps and the trusted image facemaps, a message is sent to the computing device, a third-party server, or both providing notice of the match.

US 2020/0045226 A1 shows a technique capable of guaranteeing that an image submitted online during identity verification is an image photographed on the site. D2 discloses an information processing method executed by an information processing device including a display unit includes displaying, on the display unit, an image of a photographing region output by a photographing device as well as displaying, in the photographing region displayed on the display unit, a photographing guide indicating a position of an identity verification document in the photographing region. It further includes a holding method of the identity verification document, wherein the photographing guide is selected based on a predetermined selection logic, and causing the photographing device to photograph the image of the photographing region.

Based on this, it is the object of the present invention to further ensure the timeliness and or originality of the recording of a physical object, for example an identification document of the user, using automatized means.

This object is achieved through a method for automatic proofing of a recording, wherein a recording is captured using a camera of a recording device having a display configured to display a video stream generated by the camera while the recording is being captured from the video stream generated by the camera, wherein, during the recording, a user is challenged to show a physical object, in particular an identification document, to the camera, which is further developed in that for further verifying timeliness and originality of the recording, the user is challenged to present the physical object to the camera of the recording device in a unique or quasi-unique spatially varied sequence of presentations with one or more steps, wherein a determination of timeliness and originality of the recording is carried out by means of a validation unit having access to the recording and includes an automatic check whether the physical object is present in the recording in accordance with the steps of the spatially varied sequence of presentations, wherein the originality component of the proofing is ensured by randomly or quasi-randomly selecting the coordinates, where the physical object is to be placed.

The method is specifically designed to ensure the timeliness and the originality of a recording of the physical object, for example an identification document or a fingerprint, without the need of a human operator to perform the proofing checks. For the purpose of the present invention, the concept of a physical object is meant to denote any object whose identity is to be verified and that may be presented to the camera in a sequence of one or more randomly selected locations and moved to and between the one or more different locations as such. Next to inanimate objects, this concept of a physical object may include the face of a user. The concept does not cover the movement of an isolated movable feature of that face, e.g., the mouth or the eyes, while speaking, while the face *in toto* is kept in the same position.

For the purpose of executing the method, the user is challenged to move the physical object to specific locations within or outside the field of view of the camera, such that the movements can at least partially be recorded by the camera. This measure adds another level of proofing specifically adapted to recordings of physical objects. This specific application may be combined with other authentication needs or proofing layers, such as the recording of the face of the user, spoken challenges, or other types of watermarking the recording.

Even a sequence with only one step will ensure a basic level of security, since it is unlikely that an attacker will guess the right position for presenting the object. However, the level of security is increased with an increasing number of steps.

Since the user is supposed to be able to carry out the method by himself or herself, the recording device may be a mobile recording device, such as any of a smart phone, a tablet computer or a laptop computer, or a stationary recording device, such as a desktop computer or a stationary user terminal having the required components, such as a camera and a display screen. The camera may be a camera disposed on the side of the recording device opposite to the side of the display, or it may be a so-called selfie camera which is disposed on the same side as the display. The latter may be more suitable for cases in which the user is to present his face to the camera.

In general, the method is very well suited for physical objects, in particular identification documents, that have optically prominent features that are easy to track with technical means. For example, it is easy to instruct the user to place the photo of the identity document into the marked area, and to use face recognition at the same time for checking whether the instruction has been carried out correctly. The online face recognition does not have to be overly accurate for the purpose of checking whether the instruction has been carried out correctly. It simply needs to ascertain that a face is visible inside the marked area. A more thorough face recognition that can be used to compare the face of the user to the photo on the identification document can be carried out off-line, or respectively, asynchronously, as opposed to the synchronous, or respectively, online analysis. However, thorough face recognition may also be carried out at the time of the recording.

The method is also suited for other physical objects, for example a finger. If, for example, an optical recording of the fingerprint is to be performed using a device such as a smart phone camera of the user, which is not controlled by the entity providing the service, the same can be accomplished and insured by instructing the user to hold their fingertip of their index finger into the marked area displayed on the display of the recording device, for example.

In embodiments of the method, the recording has the form of a completed video, a video stream and/or a sequence of one or more still photos taken at given times during the spatially varied sequence. The recording may also be based on a video or video stream, in the course of which still photos are taken that may have a higher resolution than the video stream itself. These still photos may be embedded in the video or the video stream for more thorough analysis of the physical object. These still photos may also just include the marked areas of the spatially varied sequence.

The present method accomplishes proofing against digital manipulations, for example deep fakes, since the recording has to be done live, which in turn significantly increases the likelihood of the occurrence of visible or detectable artifacts originating in in-time digital manipulation. The method also prevents replay attacks in which prior recordings are reused. It also makes it harder to record a prior recording, because the repaying device has to be placed in front of the recording device, which means that the edges of the replaying device may be visible in the recording.

The situation may arise when a replay attack is attempted using a previously recorded recording that was recorded according to the present inventive method, showing the physical object in a previously demanded spatially varied sequence. Since the previously recorded sequence differs from the spatially varied sequence of the present challenge, it will not match. If the attacker were to attempt to place the document according to the steps of the present sequence, this would be counteracted and made much more difficult by the random movements of the previous sequence, rendering any such attempt basically hopeless. Both these attacks would result in the detection of the recording as fraudulent attempts.

Another effect of the presently presented method is that the validatability of the authenticity of an identification document can be increased, since the movement of the identification document makes visible the optically variable safety features of the identification document and therefore increases their validatability.

In systems that perform in automated optical determination of the identity of a natural person, a hurdle is that the user must carry out the process by him- or herself. The steps to be carried out therefore have to be explained in a user-friendly and clear way. Such a system is also confronted with the challenge to both meet the highest possible security level, so that there is a high level of trust in the established identity, and to ensure that as many users as possible successfully pass through the process, that is, to provide a high "conversion rate". The process therefore has to bridge the classical conflict of objectives of user-friendliness and security. The instruction "Please move the photo of your identity document into area X" is simple and easily followed by a user.

Within the method according to the invention, the challenges of the spatially varied sequence can be presented to the user for a limited time and with specific instructions, specifying until which time the recording has to be recorded and/or with which speed the recording has to be performed. This limitation serves to ensure that the recording is done at the time of request or at the time of the challenge, that is, the timeliness component. The originality component of the proofing is ensured by randomly or quasi-randomly selecting the coordinates, where the physical object is to be placed, and possibly additionally the movements of the physical object. It can be assumed that the recording is a unique original recording taken at a specific time of the challenge, since an attacker would not have any foreknowledge of the locations or directions of the spatially varied sequence.

In embodiments, steps of the spatially varied sequence of presentations are indicated to the user successively on the display of the recording device and/or by giving the user spoken commands. Furthermore, the spatially varied sequence of presentations may include fixed or moving partial regions of, and/or movements of the object relative to, the field of view of the camera varying in size, location, direction and/or speed of the partial regions and/or movements.

Such partial regions may be marked on the display of the recording device, such as being surrounded by the frame or by lines denoting the edges of the area, if the area is rectangular. Another type of marking may be that only the partial region is displayed normally and the rest of the display is dimmed down so that it appears darker than the active region.

In a sort of a "follow-me" challenge, the marked area may be moving across the display in an arbitrary direction and a speed that is only limited by the practicality of following the moving marked area with the physical object. Instead of a marked region, the user may also be challenged to follow a moving symbol, such as a smiley icon, a ball or such that keeps moving across the display and may furthermore increase and decrease in size, indication that he user should change the distance of the object to the camera, thereby increasing or decreasing the apparent size of the physical object in the recording according to the moving symbol's size. Such "follow-me" challenges may contain twenty to thirty steps in the sequence with or without coming to a rest in between. Generally, slow speeds are preferred in "follow-me" challenges. It is not expected that the user will be able to reproduce the "follow-me" challenge exactly. Indeed, the absence of perfection in the ability to follow the markers is a sign that there is indeed a human user involved. However, it is possible to quantify the degree to which the user was able to reproduce the track or sequence of the challenge, and the threshold on this level may be set according to the individual safety requirements and weighed against user experience, which might be bad if it is too hard to complete the challenge successfully.

In the "follow-me" type challenges as well as in other types of challenges, it may be checked that the movements of the physical object appear natural. Markers for fake attempts may be if the movement of the physical object from one location the next is too straight or too uniform.

Another effect of challenging the user to vary the distance of the physical object to the camera is that, e.g. in the case of a face, but also with any other non-flat object, there will be detectable distortions. For example, when the user decreases the distance of his face to the camera, the nose will appear bigger with respect to the rest of the face than at a greater distance to the camera. These distortion effects are additional markers that indicate that it is a real face that is being presented to the camera.

A direction of movement may also be, for example, indicated by an arrow originating in the center of the display and pointing towards outside of the display in a pre-chosen direction. Also, the user may be challenged with spoken or written commands like "move to the upper left", "move down", "move to the right outside the picture"

The indication of each of the steps of the spatially varied sequence of presentations is done in embodiments for a pre-specified duration or until it has been automatically determined that the user has succeeded to present the physical object inside the field of view of the camera in accordance with the present step of the sequence, in particular in a manner allowing a verification of the physical object.

The user may be automatically given feedback to reposition the physical object when it is determined through automated real-time object recognition carried out in the recording device that the physical object is not presented in accordance with the current step of the spatially varied sequence.

In embodiments of the method, parameters defining the steps of the spatially varied sequence of presentations are transferred to the recording device upon request by the validation unit. The remote server constitutes a repository for unique or quasi-unique sequences, which ensures that the same or very similar sequences are not used more than once. Since there is only one central instance that issues the unique or quasi-unique sequences, these sequences may be designed such that they bear the least amount of resemblance to each other. For example, the spatially varied sequences may be based on a fixed set of partial regions that do not overlap. In other embodiments, partial regions may be chosen randomly, but an algorithm is used to check whether a newly created sequence has the potential to be confused with a previously created sequence because of too much similarity between the steps of the first sequence with the steps of the new sequence.

Furthermore, the parameters for the individual steps of the spatially varied sequence of presentations may all be provided by the validation unit prior to an execution of the first step of the sequence or individually after completion of the previous step of the sequence. The first of these two alternatives means that the whole sequence is created beforehand. The validation unit may produce a large batch of such sequences at the same time. The second alternative keeps the storage needs low. Also, the check whether the newly created sequence is sufficiently far from the closest previous sequence in terms of similarity, may be carried out step-by-step, meaning that each next step may be done to maximize deviation from previous sequences.

In embodiments, the validation unit performs an object recognition on the recording in order to determine whether the expected physical object is present in the recording in accordance with the parameters of each of the steps of the sequence within the period of time in which the respective step is or was active during the recording. The absence of the physical object within the parameters of an individual step results in a rejection of the recording and of the attempt of authentication. In a more nuanced approach, especially if the number of steps of the spatially varied sequence is sufficiently large, it may be sufficient that the physical object is present according to the parameters of the individual steps in a majority of steps of the sequence, where the acceptable rate of failure is to be set according to a trade-off between user experience, which is degraded by repeated failures, and the need for security.

In various embodiments, the validation unit may be implemented as software in the recording device or in a remote server, in particular the remote server that provides the spatially varied sequence.

In further embodiments, the recording device may comprise at least one active watermarking generating means and at least one active watermarking recording means, wherein the recording is watermarked by activating the at least one active watermarking generating means in a unique or quasi-unique sequence of watermarking signals, which are captured by the at least one active watermarking recording means, the output signal of which is included in the recording. This form of active watermarking by other means adds a layer of originality to the recording. The active watermarkings may be interspersed between the steps of the spatially varied sequence or, if they do not interfere with the steps too much, overlap with some or all of the steps of the spatially varied sequence.

In this context, the at least one active watermarking generating means may be one of a loudspeaker, a vibration device and a light source, in particular a flash light or the display, of the recording device and/or the at least one active watermarking recording means may be one of a microphone, an accelerometer and the camera of the recording device. Non-interfering active watermarking's may be inaudible sounds or short light flashes, for example, whereas the activation of the vibration device causes a haptic feedback which may interfere with the recording of the video by blurring the picture. This may, however, also be the desired effect to be combined with one or more of the individual steps of the spatially varied sequence. Another type of active visual watermarking may be applied when the selfie camera is used, i.e., the camera that is located on the same side as the display of the recording device. While the user follows the instructions to present his face to the camera, the display may be caused to emit a brief flash or flashes of certain colours like green, blue, yellow, red or any other colour. These flashes of colour will reflect from the user's face and be detected by the camera. A random or quasi-random unique sequence of different colours may be used.

In addition to the use as watermarking, these active watermarking generating means may also be used as feedback to the user to indicate that a step of the spatially varied sequence has been completed successfully and thus is able to strengthen security while improving the user experience and understanding.

The unique or quasi-unique sequence of watermarking signals may be transferred to the recording device upon request by the validation unit. In this context, the user initiates the recording, for example by activating a specialized app on his or her smartphone, whereupon the smart phone contacts the validation unit, for example a remote server, and requests the transmission of a unique or quasi-unique sequence of watermarking signals from the remote server. The remote server selects the previously created sequence or generates a sequence upon request and transmits it back to the smart phone, which carries out the procedure by initiating the recording including the challenges according to the steps of the transmitted spatially varied sequence.

The object of the present invention is also achieved by a system for automatic proofing of a recording comprising a recording device and a validation unit, in particular a remote server, wherein the recording device and the validation unit are set up for communicating with each other and are programmed to carry out the previously described inventive method.

The object of the present invention is also achieved by a software program product comprising a recording device software and a validation unit software which, when running on the recording device and the validation unit, in particular a remote server, of the above-described system, respectively, cause the recording device and the validation unit to carry out the above-described inventive method.

The system and the software program product according to the invention thereby embody the same features, advantages and properties as the method according to the present invention.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic of a system according to the invention,
- Fig. 2: a first embodiment of an inventive method,
- Fig. 3: a second embodiment of an inventive method,
- Fig. 4: a third embodiment of an inventive method,
- Fig. 5: a fourth embodiment of an inventive method,
- Fig. 6: a fifth embodiment of an inventive method and
- Fig. 7: a sixth embodiment of an inventive method.

In the drawings, the same or similar types of elements or respectively corresponding parts are provided with the same reference numbers in order to prevent the item from needing to be reintroduced.

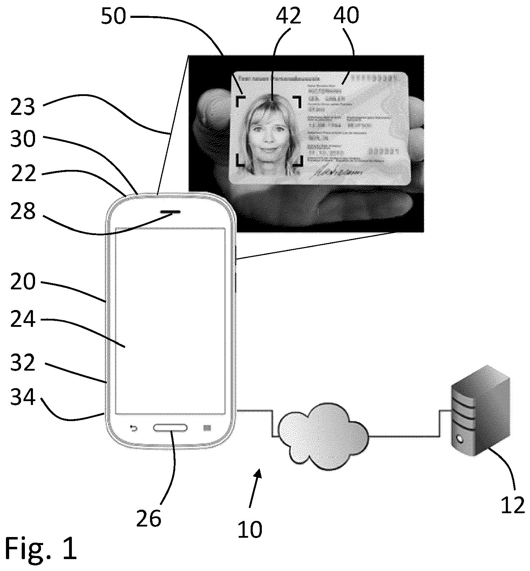

Fig. 1 shows a schematic of a system 10 according to the invention for automatic proofing of a recording of a physical object, in this case an identification document 40. A centerpiece of the system 10 is a recording device 20, which may be a smart phone, tablet computer or a desktop computer having at least a camera 22 and a display 24. The smart phone shown in Fig. 1 is fully equipped with not only a camera 22 and a display 24, but also a microphone 26, a loudspeaker 28, the light source 30, which is positioned on the back of the smart phone, as is the camera 22, and internal to the smart phone, an accelerometer 32 and a vibration device 34 providing haptic feedback, such as clicking or buzzing. The camera 22 is pointed at the user holding the identification document 40 into the field of view 23 of the camera, an image of which is displayed on the display 24 of the smart phone, the display also overlays outlines of a frame to indicate a partial region 50 into which the user is prompted to place the photo 42 of the identification document 40. Within the method according to the present invention, the user is prompted in the sequence of several steps, in which different partial regions 50 may be presented to the user one after another in a uniquely or quasi-uniquely random fashion, and to move the identification document in specific directions as well.

The recording device 20 is connected remotely, as indicated by the cloud, with a remote server serving as validation unit 12 of the present method and system 10. The validation unit may provide the recording device 20 with the spatially varied sequence upon request, either in bulk or step by step, or it may provide the recording device 20 with a random seed number which the recording device 20 may use to generate the spatially varied sequence, using an algorithm that is known to the validation unit, so that the location unit can did use the sequence after it has been completed by the recording device 20. The sequence of challenges is recorded by the recording device 20 as a completed video, as a video stream or as a series of still photos, which may also be embedded in the video stream or the completed video or attached thereto as part of the recording. The recording is either streamed directly to the validation unit 12 or transmitted to the validation unit 12 after the completion of the recording for the purpose of analysis and verification of the originality and timeliness of the recording, as well as for the authentication of the physical object and possibly the user.

Instead of an identification document, physical objects may also be other objects such as valuables to be sold on the Internet, for example, or biometric features such as the fingerprints on fingertips of the user.

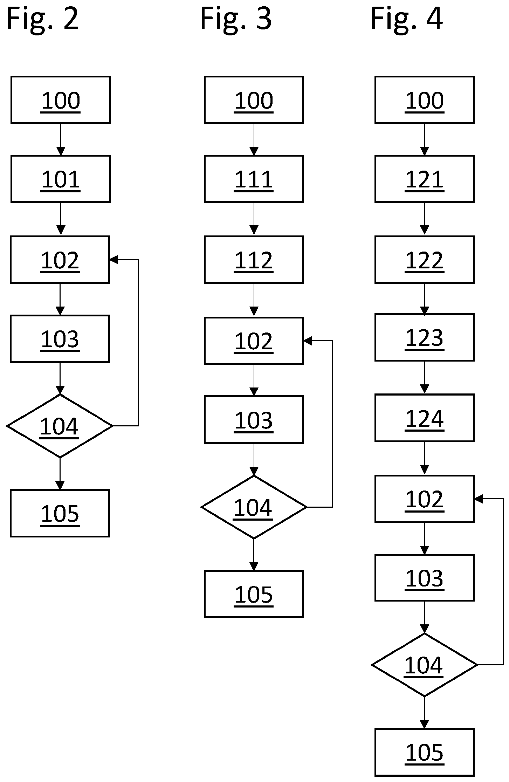

Fig. 2 presents schematically a first embodiment of the method according to the invention. First, the user starts the process of recording (step 100), prompting the recording device 20 to request a unique or quasi-unique spatially varied sequence from the validation unit 12 (step 101). The validation unit 12 selects or generates the sequence and transmits the sequence in bulk or step-by-step to the recording device 20, which in turn displaces the parameters of the first step of the sequence on its display 24 to the user as a challenge (step 102).

The user then presents the physical object to the camera 22 of the recording device 20 according to the challenge (step 103), which the recording device 20 records. The recording device 20 then evaluates in step 104 whether the sequence has another step. If so, it returns to step 102 and presents the challenge of the next step of the spatially varied sequence to the user, using the parameters of the next step stored previously or using the parameters of the next step as requested from the validation unit 12 step-by-step. Steps 103 and 104 repeat themselves until the end of the sequence is reached. Finally, in step 105, the recording is transmitted to the validation unit 12, which performs the validation of the recording in terms of at least originality and/or timeliness. Step 105 may also be carried out simultaneously to the recording, if the recording is a video stream which is streamed directly to the validation unit 12.

Fig. 3 presents schematically a second embodiment of the method according to the invention, which differs from the first embodiment in that the way the sequence is generated is different. In this second embodiment of the method, the recording device 20 requests a random seed from the validation unit 12 (step 111) after the user has started the recording (step 100). The recording device 20 then generates the sequence based on the random seed received from the validation unit 12 (step 112), possibly taking further account of the type of object, hardware parameters of the recording device 20 and/or a timestamp, for example. The rest of the method is the same as in the first embodiment of Fig. 2. When transferring the recording back to the validation unit 12 in step 105, either the parameters of these spatially varied sequence or the further parameters are used for generating the sequence or transmitted back to the validation unit 12 along with the recording.

Fig. 4 shows a third embodiment of method according to the present invention that differs from the previous embodiments in the way the spatially varied sequence is generated or selected. After the user has started the recording (step 100), the recording device 20 transmits an image of the physical object to the validation unit 12 (step 121). The validation unit 12 then determines the type of the physical object presented to the camera, for example a certain type of identification document having known security features, the finger presenting the fingertip, valuables like collectors coins, stamps, jewelry etc. (step 122), and, on the basis of the identified type of physical object, generates or selects the spatially varied sequence (step 123) to be transmitted to the recording device 20 (step 124). The validation unit 12 may choose the sequence such that security features of the identified physical object may be highlighted during the course of successive steps of the sequence, the execution of which is the same as in the first and second examples of Figs. 2 and 3.

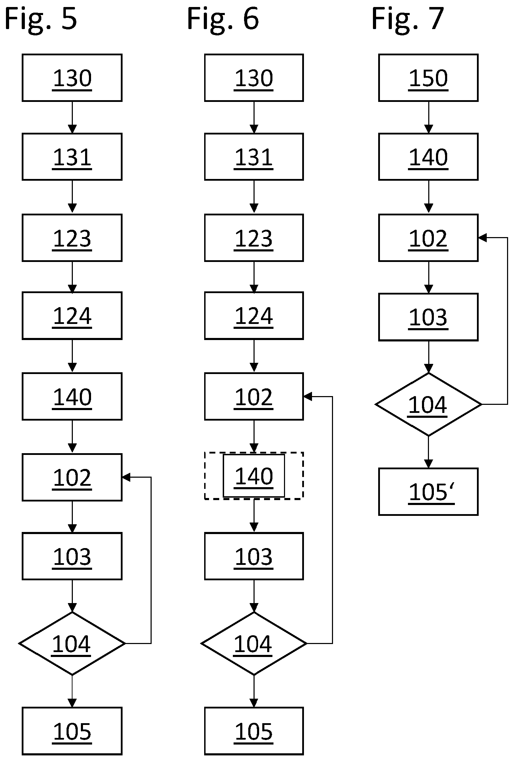

A fourth embodiment of the method according to the present invention is shown in Fig. 5. In this embodiment, the user does not start the recording manually. Instead, the type of the physical object is determined beforehand (step 130), either by the user selecting the type of object and inputting the type of object into the recording device 20 via touchscreen, for example, or by the recording device 20 automatically determining the type of physical object through an object recognition performed on its camera feed. The recording device 20 then transmits the physical object type to the validation unit 12 (step 131), which in turn generates the sequence (step 123), which may be carried out in the same way as in the third embodiment according to Fig. 4. After transmitting the sequence from the validation unit 12 to the recording device 20 (step 124), the recording starts automatically in the recording device 20 (step 140). The execution of the steps of the sequence (steps 102 to 104) and the final validation (step 105) take place in the same way as in the previous embodiments.

Fig. 6 shows a fifth embodiment of the method according to the present invention. The fifth embodiment differs from the fourth embodiment shown in Fig. 5 in a reversal of the order of two steps. In this fifth embodiment, the recording started (step 140) not directly after the sequence has been transmitted from the validation unit 12 to the recording device 20, but, in particular immediately, after the recording device has already challenged the user according to the first step of the spatially varied sequence (step 102). This presents the latest practical point of time to start the recording, which is beneficial for keeping the size of the recording data manageable.

A sixth embodiment of the method according to the present invention is shown in Fig. 7. In this embodiment, the recording device 20 itself generates the spatially varied sequence (step 150) and starts the recording automatically (step 140). After having carried out the sequence of challenges (steps 102, 103, 104), the recording is transmitted to the validation unit 12 for analysis and validation (step 105'), where, in deviation from the other embodiments, the validation unit 12 does not rely on its stored information about the sequence, but on information about the sequence transmitted to it by the recording device 20 along with the recording. This embodiment may serve to determine that the recording has been recorded by a specific recording device at a specific point in time. Since no random seed or sequence is requested from the validation unit 12, an attacker having access to the device might be able to circumvent this embodiment. A stationary device storing the recording locally may still be safe. The method may be implemented such that the validation unit 12 is only asked to validate a sample set of all recordings to verify that the process in general is not compromised. An example for the application of this embodiment of the method might be an access control inside a building, for which the validation unit 12 can reliably verify the access by a specific person.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 10: System
- 12: validation unit
- 20: recording device
- 22: camera
- 23: field of view
- 24: display
- 26: microphone
- 28: loudspeaker
- 30: light source
- 32: accelerometer
- 34: vibration device
- 40: identification document
- 42: photo
- 50: partial region
- 100: user starts process of recording
- 101: recording device requests and receives sequence
- 102: recording device displays next step
- 103: user presents physical object
- 104: evaluation: end of sequence?
- 105, 105': validation by validation unit
- 111: recording device requests random seed
- 112: recording device generates sequence
- 121: recording device transmits image to validation unit
- 122: validation unit determines physical object type
- 123: validation unit generates sequence
- 124: validation unit transmits sequence to recording device
- 130: user/recording device determines physical object type
- 131: recording device transmits physical object type to validation unit
- 140: recording starts automatically in recording device
- 150: recording device generates sequence

## Claims

1. A method for automatic proofing of a remote recording, wherein a recording is captured using a camera (22) of a recording device (20) having a display (24) configured to display a video stream generated by the camera (22) while the recording is being captured from the video stream generated by the camera (22), wherein, during the recording, a user is challenged to show a physical object (40), in particular an identification document, to the camera (22), **characterized in that** for further verifying timeliness and originality of the recording, the user is challenged to present the physical object (40) to the camera (22) of the recording device (20) in a unique or quasi-unique spatially varied sequence of presentations with one or more steps, wherein a determination of timeliness and originality of the recording is carried out by means of a validation unit (12) having access to the recording and includes an automatic check whether the physical object (40) is present in the recording in accordance with the steps of the spatially varied sequence of presentations, wherein the originality component of the proofing is ensured by randomly or quasi-randomly selecting the coordinates, where the physical object is to be placed.

2. The method according to claim 1, **characterized in that** the recording has the form of a completed video, a video stream and/or a sequence of one or more still photos taken at given times during the spatially varied sequence.

3. The method according to claim 1 or 2, **characterized in that** steps of the spatially varied sequence of presentations are indicated to the user successively on the display (24) of the recording device (20) and/or by giving the user spoken commands.

4. The method according one of claims 1 to 3, **characterized in that** the spatially varied sequence of presentations includes fixed or moving partial regions (50) of, and/or movements of the object relative to, the field of view of the camera (22) varying in size, location, direction and/or speed of the partial regions (50) and/or movements.

5. The method according to one of claims 1 to 4, **characterized in that** the indication of each of the steps of the spatially varied sequence of presentations is done for a pre-specified duration or until it has been automatically determined that the user has succeeded to present the physical object (40) inside the field of view of the camera (22) in accordance with the present step of the sequence, in particular in a manner allowing a verification of the physical object (40).

6. The method according to one of claims 1 to 5, **characterized in that** the user is automatically given feedback to reposition the physical object (40) when it is determined through automated real-time object recognition carried out in the recording device (20) that the physical object (40) is not presented in accordance with the current step of the spatially varied sequence.

7. The method according to one of claims 1 to 6, **characterized in that** parameters defining the steps of the spatially varied sequence of presentations are transferred to the recording device (20) from the validation unit (12) upon request.

8. The method according to claim 7, **characterized in that** the parameters for the individual steps of the spatially varied sequence of presentations are all provided by the validation unit prior to an execution of the first step of the sequence or individually after completion of the previous step of the sequence.

9. The method according to one of claims 1 to 8, **characterized in that** the validation unit (12) performs an object recognition on the recording in order to determine whether the expected physical object (40) is present in the recording in accordance with the parameters of each of the steps of the sequence within the period of time in which the respective step is or was active during the recording.

10. The method according to one of claims 1 to 9, **characterized in that** the validation unit (12) is implemented as software in the recording device (20) or in a remote server.

11. The method according to one of claims 1 to 10, **characterized in that** the recording device (20) comprises at least one active watermarking generating means and at least one active watermarking recording means, wherein the recording is watermarked by activating the at least one active watermarking generating means in a unique or quasi-unique sequence of watermarking signals, which are captured by the at least one active watermarking recording means, the output signal of which is included in the recording.

12. The method according to claim 11, **characterized in that** the at least one active watermarking generating means is one of a loudspeaker (28), a vibration device (34) and a light source (30), in particular a flash light or the display (24), of the recording device (20) and/or that the at least one active watermarking recording means is one of a microphone (26), an accelerometer (32) and the camera (22) of the recording device (20).

13. The method according to claim 11 or claim 12, **characterized in that** the unique or quasi-unique sequence of watermarking signals is transferred to the recording device (20) upon request by the validation unit (12).

14. A system (10) for automatic proofing of a remote recording comprising a recording device (20) and a validation unit (12), in particular a remote server, wherein the recording device (20) and the validation unit are capable of communicating with each other and are programmed to carry out the method according to one of claims 1 to 13.

15. A software program product comprising a recording device (20) software and a validation unit (12) software which, when running on the recording device (20) and the validation unit (12), in particular a remote server, of the system (10) according to claim 14, respectively, cause the recording device (20) and the validation unit (12) to carry out the method according to one of claims 1 to 13.

## Patentansprüche

1. Verfahren zur automatischen Verifikation einer Fernaufzeichnung, wobei eine Aufzeichnung unter Verwendung einer Kamera (22) einer Aufzeichnungseinrichtung (20) aufgenommen wird, die eine Anzeige (24) aufweist, die so ausgestaltet ist, dass sie einen Videostream anzeigt, der von der Kamera (22) erzeugt wird, während die Aufzeichnung von dem von der Kamera (22) erzeugten Videostream aufgenommen wird, wobei während der Aufzeichnung ein Benutzer aufgefordert wird, der Kamera (22) ein physikalisches Objekt (40), insbesondere ein Identifikationsdokument (22), zu zeigen, **dadurch gekennzeichnet, dass** zur weiteren Verifikation der Aktualität und Echtheit der Aufzeichnung der Benutzer aufgefordert wird, der Kamera (22) der Aufzeichnungseinrichtung (20) das physikalische Objekt (40) in einer einzigartigen oder quasi-einzigartigen räumlich variierten Folge von Präsentationen mit einem oder mehreren Schritten zu präsentieren, wobei eine Bestimmung der Aktualität und Echtheit der Aufzeichnung mittels einer Validierungseinheit (12) durchgeführt wird, die über Zugriff auf die Aufzeichnung verfügt, und eine automatische Überprüfung, ob das physikalische Objekt (40) in der Aufzeichnung in Übereinstimmung mit den Schritten der räumlich variierten Folge von Präsentationen vorhanden ist, umfasst, wobei die Echtheitskomponente der Verifikation durch zufälliges oder quasi-zufälliges Auswählen der Koordinaten, wo das physikalische Objekt zu platzieren ist, sichergestellt wird.

2. Verfahren nach Anspruch 1, **dadurch gekennzeichnet, dass** die Aufzeichnung die Form eines abgeschlossenen Videos, eines Videostreams und/oder einer Folge von einem oder mehreren Standfotos aufweist, die zu gegebenen Zeitpunkten während der räumlich variierten Folge gemacht werden.

3. Verfahren nach Anspruch 1 oder 2, **dadurch gekennzeichnet, dass** Schritte der räumlich variierten Folge von Präsentationen dem Benutzer aufeinanderfolgend auf der Anzeige (24) der Aufzeichnungseinrichtung (20) und/oder dadurch angegeben werden, dass dem Benutzer gesprochene Anweisungen gegeben werden.

4. Verfahren nach einem der Ansprüche 1 bis 3, **dadurch gekennzeichnet, dass** die räumlich variierte Folge von Präsentationen feste oder bewegliche Teilregionen (50) und/oder Bewegungen des Objekts in Bezug auf das Sichtfeld der Kamera (22) umfasst, die in Größe, Ort, Richtung und/oder Geschwindigkeit der Teilregionen (50) und/oder Bewegungen variieren.

5. Verfahren nach einem der Ansprüche 1 bis 4, **dadurch gekennzeichnet, dass** die Angabe jedes der Schritte der räumlich variierten Folge von Präsentationen während einer im Voraus angegebenen Dauer vorgenommen wird, oder bis automatisch bestimmt wurde, dass der Benutzer das Präsentieren des physikalischen Objekts (40) im Inneren des Sichtfelds der Kamera (22) in Übereinstimmung mit dem gegenwärtigen Schritt der Folge, insbesondere auf eine Weise, die eine Überprüfung des physikalischen Objekts (40) erlaubt, erfolgreich vorgenommen hat.

6. Verfahren nach einem der Ansprüche 1 bis 5, **dadurch gekennzeichnet, dass** dem Benutzer automatisch Rückmeldung zum Repositionieren des physikalischen Objekts (40) gegeben wird, wenn mittels automatisierter Echtzeit-Objekterkennung, die in der Aufzeichnungseinrichtung (20) durchgeführt wird, bestimmt wird, dass das physikalische Objekt (40) nicht in Übereinstimmung mit dem gegenwärtigen Schritt der räumlich variierten Folge präsentiert wird.

7. Verfahren nach einem der Ansprüche 1 bis 6, **dadurch gekennzeichnet, dass** Parameter, welche die Schritte der räumlich variierten Folge von Präsentationen definieren, auf Anforderung von der Validierungseinheit (12) an die Aufzeichnungseinrichtung (20) übertragen werden.

8. Verfahren nach Anspruch 7, **dadurch gekennzeichnet, dass** die Parameter für die einzelnen Schritte der räumlich variierten Folge von Präsentationen alle von der Validierungseinheit vor einer Ausführung des ersten Schritts der Folge oder einzeln nach Abschluss des vorherigen Schritts der Folge bereitgestellt werden.

9. Verfahren nach einem der Ansprüche 1 bis 8, **dadurch gekennzeichnet, dass** die Validierungseinheit (12) eine Objekterkennung an der Aufzeichnung durchführt, sodass bestimmt wird, ob das erwartete physikalische Objekt (40) in der Aufzeichnung in Übereinstimmung mit den Parametern jedes der Schritte der Folge innerhalb des Zeitraums vorhanden ist, in dem der jeweilige Schritt während der Aufzeichnung aktiv ist oder war.

10. Verfahren nach einem der Ansprüche 1 bis 9, **dadurch gekennzeichnet, dass** die Validierungseinheit (12) als Software in der Aufzeichnungseinrichtung (20) oder in einem entfernten Server implementiert wird.

11. Verfahren nach einem der Ansprüche 1 bis 10, **dadurch gekennzeichnet, dass** die Aufzeichnungseinrichtung (20) mindestens ein aktives Wasserzeichen-Erzeugungsmittel und mindestens ein aktives Wasserzeichen-Aufzeichnungsmittel umfasst, wobei die Aufzeichnung mit einem Wasserzeichen versehen wird mittels Aktivierens des mindestens einen aktiven Wasserzeichen-Erzeugungsmittels in einer einzigartigen oder quasi-einzigartigen Folge von Wasserzeichensignalen, die von dem mindestens einen Wasserzeichen-Aufzeichnungsmittel aufgenommen werden, dessen Ausgabesignal in der Aufzeichnung umfasst ist.

12. Verfahren nach Anspruch 11, **dadurch gekennzeichnet, dass** das mindestens eine aktive Wasserzeichen-Erzeugungsmittel eines von einem Lautsprecher (28), einer Vibrationseinrichtung (34) und einer Lichtquelle (30), insbesondere ein Blitzlicht oder die Anzeige (24), der Aufzeichnungseinrichtung (20), ist und/oder dass das mindestens eine aktive Wasserzeichen-Aufzeichnungsmittel eines von einem Mikrofon (26), einem Beschleunigungsmesser (32) und der Kamera (22) der Aufzeichnungseinrichtung (20) ist.

13. Verfahren nach Anspruch 11 oder Anspruch 12, **dadurch gekennzeichnet, dass** die eindeutige oder nahezu eindeutige Folge von Wasserzeichensignalen auf Anforderung von der Validierungseinheit (12) an die Aufzeichnungseinrichtung (20) übertragen wird.

14. System (10) zur automatischen Verifikation einer Fernaufzeichnung, das eine Aufzeichnungseinrichtung (20) und eine Validierungseinheit (12), insbesondere einen entfernten Server, umfasst, wobei die Aufzeichnungseinrichtung (20) und die Validierungseinheit in der Lage sind, miteinander zu kommunizieren und so programmiert sind, dass sie das Verfahren nach einem der Ansprüche 1 bis 13 durchführen.

15. Software-Programmprodukt, das eine Software einer Aufzeichnungseinrichtung (20) und eine Software einer Validierungseinheit (12) umfasst, die, wenn sie auf der Aufzeichnungseinrichtung (20) und der Validierungseinheit (12), insbesondere einem entfernten Server, des Systems (10) nach Anspruch 14 ausgeführt werden, die Aufzeichnungseinrichtung (20) beziehungsweise die Validierungseinheit (12) veranlassen, das Verfahren nach einem der Ansprüche 1 bis 13 durchzuführen.

## Revendications

1. Un procédé de vérification automatique d'un enregistrement à distance, dans lequel un enregistrement est capturé en utilisant une caméra (22) d'un dispositif d'enregistrement (20) comprenant un écran (24) conçu pour afficher un flux vidéo généré par la caméra (22) pendant que l'enregistrement est capturé à partir du flux vidéo généré par la caméra (22) ; pendant l'enregistrement, un utilisateur est invité à présenter un objet physique (40), en particulier un document d'identification, à la caméra (22), **caractérisée en ce que**, pour vérifier de manière plus approfondie la validité et l'authenticité de l'enregistrement, l'utilisateur est invité à présenter l'objet physique (40) à la caméra (22) du dispositif d'enregistrement (20) dans une séquence unique ou quasi unique de présentations spatialement variées en une ou plusieurs étapes, la détermination de la validité et de l'authenticité de l'enregistrement étant effectuée au moyen d'une unité de validation (12) ayant accès à l'enregistrement et comprenant une vérification automatique de la présence de l'objet physique (40) dans l'enregistrement conformément aux étapes de la séquence de présentations spatialement variée, la composante d'authenticité de la preuve étant assurée par le fait de sélectionner de façon aléatoire ou quasi aléatoire les coordonnées selon lesquelles l'objet physique doit être placé.

2. Le procédé selon la revendication 1, **caractérisé en ce que** l'enregistrement se présente sous la forme d'une vidéo complète, d'un flux vidéo et/ou d'une séquence d'une ou plusieurs photos fixes prises à des moments donnés pendant la séquence spatialement variée.

3. Le procédé selon la revendication 1 ou la revendication 2, **caractérisé en ce que** les étapes de la séquence de présentations spatialement variées sont indiquées à l'utilisateur successivement sur l'écran (24) du dispositif d'enregistrement (20) et/ou en donnant à l'utilisateur des commandes vocales.

4. Le procédé selon l'une des revendications 1 à 3, **caractérisé en ce que** la séquence de présentations spatialement variée comprend des zones partielles fixes ou mobiles (50) du champ de vision de la caméra (22) et/ou des mouvements de l'objet par rapport à celui-ci, qui varient en taille, en emplacement, en direction et/ou en vitesse des zones partielles (50) et/ou des mouvements.

5. Le procédé selon l'une des revendications 1 à 4, **caractérisé en ce que** l'indication de chacune des étapes de la séquence de présentations spatialement variées est effectuée pendant une durée prédéfinie ou jusqu'à ce qu'il ait été automatiquement déterminé que l'utilisateur a réussi à présenter l'objet physique (40) à l'intérieur du champ de vision de la caméra (22) conformément à l'étape en cours de la séquence, en particulier d'une manière permettant une vérification de l'objet physique (40).

6. Le procédé selon l'une des revendications 1 à 5, **caractérisé en ce que** l'utilisateur reçoit automatiquement un retour d'information pour repositionner l'objet physique (40) lorsqu'il est déterminé, par une reconnaissance automatique en temps réel de l'objet effectuée dans le dispositif d'enregistrement (20), que l'objet physique (40) n'est pas présenté conformément à l'étape en cours de la séquence spatialement variée.

7. Le procédé selon l'une des revendications 1 à 6, **caractérisé en ce que** les paramètres définissant les étapes de la séquence de présentations spatialement variées sont transférés à l'appareil d'enregistrement (20) depuis l'unité de validation (12) sur demande.

8. Le procédé selon la revendication 7, **caractérisé en ce que** les paramètres pour les étapes individuelles de la séquence de présentations spatialement variées sont tous fournis par l'unité de validation avant l'exécution de la première étape de la séquence ou individuellement après l'achèvement de l'étape précédente de la séquence.

9. Le procédé selon l'une des revendications 1 à 8, **caractérisé en ce que** l'unité de validation (12) effectue une reconnaissance d'objet sur l'enregistrement afin de déterminer si l'objet physique attendu (40) est présent dans l'enregistrement conformément aux paramètres de chacune des étapes de la séquence pendant la période de temps au cours de laquelle l'étape respective est ou était active pendant l'enregistrement.

10. Le procédé selon l'une des revendications 1 à 9, **caractérisé en ce que** l'unité de validation (12) est mise en œuvre sous forme de logiciel dans le dispositif d'enregistrement (20) ou dans un serveur distant.

11. Le procédé selon l'une des revendications 1 à 10, **caractérisé en ce que** le dispositif d'enregistrement (20) comprend au moins un moyen de génération de tatouage numérique actif et au moins un moyen d'enregistrement de tatouage numérique actif, l'enregistrement étant tatoué numériquement par l'activation dudit au moins un moyen de génération de tatouage numérique actif dans une séquence unique ou quasi unique de signaux de tatouage numérique, qui sont capturés par ledit au moins un moyen d'enregistrement de tatouage numérique actif, dont le signal de sortie est inclus dans l'enregistrement.

12. Le procédé selon la revendication 11, **caractérisé en ce que** ledit au moins un moyen de génération de tatouage numérique actif est l'un parmi un haut-parleur (28), un dispositif de vibration (34) et une source de lumière (30), en particulier un flash ou l'écran (24), du dispositif d'enregistrement (20) et/ou **en ce que** ledit au moins un moyen d'enregistrement de tatouage numérique actif est l'un parmi un microphone (26), un accéléromètre (32) et la caméra (22) du dispositif d'enregistrement (20).

13. Le procédé selon la revendication 11 ou la revendication 12, **caractérisé en ce que** la séquence unique ou quasi unique de signaux de tatouage numérique est transférée au dispositif d'enregistrement (20) à la demande de l'unité de validation (12).

14. Un système (10) pour la vérification automatique d'un enregistrement à distance comprenant un dispositif d'enregistrement (20) et une unité de validation (12), en particulier un serveur distant, le dispositif d'enregistrement (20) et l'unité de validation étant aptes à communiquer entre eux et sont programmés pour mettre en œuvre le procédé selon l'une des revendications 1 à 13.

15. Un produit logiciel comprenant un logiciel pour dispositif d'enregistrement (20) et un logiciel pour unité de validation (12) qui, lorsqu'ils sont exécutés sur le dispositif d'enregistrement (20) et l'unité de validation (12), en particulier un serveur distant, du système (10) selon la revendication 14, amènent respectivement le dispositif d'enregistrement (20) et l'unité de validation (12) à mettre en œuvre le procédé selon l'une des revendications 1 à 13.
